# EUROPÄISCHE PATENTSCHRIFT

(11) **EP 0 572 778 B1**
(45) Veröffentlichungstag und Bekanntmachung des Hinweises auf die Patenterteilung: **19.06.1996**
(21) Anmeldenummer: 93105392.0
(22) Anmeldetag: 01.04.1993
(51) Int. Cl.: C01C 1/12

(54) **Verfahren zur Rückgewinnung von Ammoniak und organischen Verbindungen aus mit organischen Stoffen, Kohlendioxid und Ammoniak beladenen Abgasen**
Process for the recovery of ammonia and organic compounds from flue gases containing organic compounds, carbon dioxide and ammonia
Procédé de récupération d'ammoniac et de composés organiques du gaz de fumée contenant des composés organiques, le dioxyde de carbone et l'ammoniac

(30) Priorität: 30.05.1992 DE 4217921
(43) Veröffentlichungstag der Anmeldung: 08.12.1993
(73) Patentinhaber: HÜLS AKTIENGESELLSCHAFT, D-45764 Marl (DE)
(72) Erfinder: Heitmann, Wilhelm, Dr., W-4690 Herne 1 (DE)

(56) Entgegenhaltungen:
- CA-A- 943 324

## Beschreibung

Bei einer Reihe von chemischen Verfahren fällt als Koppelprodukt Ammoniak an, das beladen mit organischen Produkten und mehr oder minder großen Mengen an C0₂, ausgeschleust werden muß. Beispielhaft genannt seien die Herstellung von O-Carbamaten aus Harnstoff und Alkohol oder die von N-substituierten Urethanen aus Harnstoff, Amin und Alkohol. Aber auch bei Reaktionen, wo Ammoniak Reaktionskomponente ist, muß häufig Abgas ausgeschleust werden, um Anreicherungen von Nebenprodukten und/oder Inerten zu verhindern. Auch in diesen ammoniakhaltigen Abgasen findet sich häufig C0₂, was die Aufarbeitung und Rückgewinnung der Wertstoffe wegen der Bildung von Ammoniumcarbamat, das sich als Feststoff auf Wärmetauscherflächen abscheidet oder zum Verstopfen von Rohrleitungen führt, erschwert oder gar unmöglich macht. Daher wird häufig auf eine Aufarbeitung verzichtet und die Entsorgung durch Verbrennen durchgeführt. Der Trend geht aber eindeutig zu einer stofflichen Verwertung dieser Abfallstoffe, was noch dadurch gefördert wird, daß Produktionsgenehmigungen dies oft als Auflagen enthalten. Da Ausnahmen zur thermischen Entsorgung von ammoniakhaltigen Abgasen nur noch schwierig zu erlangen sind, besteht Bedarf an geeigneten Verfahren zur Rückgewinnung von Ammoniak und anderer Wertstoffe aus GO_{z}-haltigen Abgasen.

Kohlendioxid und Ammoniak bilden Ammoniumcarbamat nach folgender Gleichung: 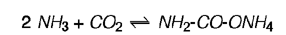 Das Gleichgewicht dieser Reaktion ist von R.N. Bennett et al. (Trans. Farad. Soc. 49 (1953), 925) und von D. Janjic (Helv. Chim. Acta 47 (1964), 1879) bestimmt worden. Danach ist das Ammoniumcarbamat bei 1 bar unter eigenem Dampfdruck bis etwa 60 °C beständig.

Da die Dissoziationskonstante 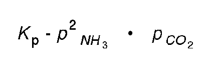 ist, wobei 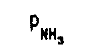 und 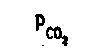 die Partialdrücke von Ammoniak und Kohlendioxid sind, kann man für jede Partialdruckkombination die Zersetzungstemperatur des Ammoniumcarbamats ermitteln und die Prozeßbedingungen so einstellen, daß sich kein festes Ammoniumcarbamat abscheidet.

Da Ammoniumcarbamat in flüssigem Ammoniak nahezu unlöslich ist, kann Ammoniak in Gegenwart von Kohlendioxid auch nicht ohne Belegung der für die Kondensation erforderlichen Wärmetauscher durch Ammoniumcarbamat verflüssigt werden.

Zwar kann durch Installation eines zweiten, parallel geschalteten Kondensators, auf den umgeschaltet wird, wenn mit dem ersten durch Ammoniumcarbamat-Belegung die erforderliche Kühlleistung nicht mehr erbracht werden kann, bei Temperaturen unterhalb der Zersetzungstemperatur gefahren werden. Doch hat diese Fahrweise außer der zusätzlichen Investition und dem Aufwand für Überwachung und Entfernung der Belegung insbesondere den Nachteil, daß das so erhaltene Ammoniak nicht frei von organischen Verunreinigungen und somit eine Wiederverwendung nicht gegeben ist.

So werden in der US-PS 30 13 065 die bei der Herstellung von Ethylcarbamat durch Umsetzen von Harnstoff und Ethanol unter einem Druck von 6 bis 7 bar entstehenden Brüden partiell alternativ bei 90 °C und bei 20 °C kondensiert. Bei 20 °C belegt sich der Kondensator mit Ammoniumcarbamat; das entspannte NH₃ enthält dann noch ca. 2 Gew.-% Ethanol. Ein weiterer Nachteil des Verfahrens ist, daß der Inhalt des Kondensators nach Umschalten auf den Parallelkondensator außer festem Ammoniumcarbamat noch die Gasphase enthält, die nur unter erheblichen apparativen Aufwand, z.B. Entspannen und anschließende Verdichtung und Rückführung in das System entsorgt werden kann.

In der AT-PS 261 638 und in Chem. Ing. Techn. 42 (1970), 521 wird ein Verfahren angegeben speziell für die Abgas-Aufarbeitung bei der Melaminherstellung. Hier werden C0₂ und NH₃ rein gewonnen, indem zunächst drucklos bei niedriger Temperatur das C0₂ mit wäßriger Ammoniak-Lösung als Ammoniumcarbonat ausgewaschen wird, während Ammoniak mit Wasser gesättigt am Kopf des Waschers anfällt. Es wird anschließend durch Tieftemperaturrektifikation getrocknet. Aus der im Sumpf des Waschers anfallende ammoniakalischen Ammoniumcarbonat-Lösung kann wegen der Bildung eines konstant siedenden Gemisches nur ein Teil des gelösten Ammoniaks in der anschließenden Strippkolonne abgetrennt werden. In einer weiteren Destillation unter Druckwird das durch thermische Zersetzung des Ammoniumcarbonats freiwerdende C0₂ als Kopfprodukt abgezogen, wobei im Oberteil der Kolonne sich ablagerndes Ammoniumcarbamat durch Eindüsen von Wasser gelöst wird. Ein Teil des Sumpfproduktes wird in einer weiteren Destillation von C0₂ und NH₃ befreit, die in die erste Waschstufe zurückkehren, während das Wasser ausgeschleust wird.

Nachteilig an dem Verfahren ist die drucklose Abtrennung des Ammoniaks und seine Verflüssigung bei tiefer Temperatur, der große Wasserkreislauf und der damit verbundene hohe Energieverbrauch und das hohe Investment - es sind sechs Kolonnen erforderlich.

Für die Behandlung von Abgasen, die noch organische Produkte enthalten, ist das Verfahren kaum geeignet, da nach der (unvollständigen) Kohlendioxidabtrennung eine ca. 20 Gew.-%ige Ammoniak-Lösung verbleibt, aus der dann die organischen Komponenten abzutrennen wären.

Das Auswaschen von Kohlendioxid aus Gasen mit Aminen in wäßriger Lösung ist ein in der Technikwohl bekanntes Verfahren, z.B. die Gasreinigung in der Ammoniaksynthese (Ullmann's Encyclopedia of Industrial Chemistry, 5th Ed. 1985, Vol. A2,180). Nachteilig ist außer dem Einbringen von Wasser, daß die im Abgas vorhandenen organischen Stoffe sich in mehr oder minder großem Umfang in der Absorptionsflüssigkeit lösen, aus der sie nur mit verhältnismäßig hohem Aufwand abgetrennt werden können.

Theoretisch sollte aufgrund der aus der Literatur bekannten Durchmesser des CO_{z}- und NH₃-Moleküls eine selektive Adsorption des C0₂ an einem 3Ä-Molsieb erfolgen und damit eine Abtrennung aus kohlendioxidhaltigem Abgas möglich sein. Die experimentelle Überprüfung ergab, daß NH₃ genauso stark wie C0₂ gebunden wird, so daß so C0₂ nicht abzutrennen ist.

Laut E. Jänecke (Z. Elektrochem. 35 (1929), 716) gibt es im System Ammoniak/Ammoniumcarbamat bei Temperaturen oberhalb 118,5 °C zwei flüssige Phasen neben festem Ammoniumcarbamat. Für eine technische Nutzung ist diese Beobachtung von geringem Wert, da zum einen sehr hoher Druck erforderlich ist, andererseits Ammoniumcarbamat als feste Phase vorliegt und die erforderliche Temperatur schon nahe der kritischen Temperatur des Ammoniaks liegt.

Das Auswaschen von Ammoniak mit verdünnter Schwefelsäure und Abtrennung der organischen Komponenten aus dem Filtrat ist zwar ohne größere Schwierigkeiten zu realisieren, doch ist das Verfahren unwirtschaftlich, da der Zwangsanfall an Ammoniumsulfat aus verschiedenen Prozessen, z.B. aus der Beckmannschen Umlagerung zum Caprolactam oder aus der Methacrylsäure-Herstellung aus Acetoncyanhydrin erheblich größer als der Bedarf ist.

Die Aufgabe der Erfindung bestand darin, ein Verfahren zur Gewinnung von Ammoniak und anderer Wertstoffe aus mit Kohlendioxid und organischen Stoffen beladenen Ammoniak zu entwickeln.

Gelöst wurde die Aufgabe durch Einsatz einer kombinierten Absorptions- und Rektifikationskolonne und bestimmten Verfahrensmaßnahmen.

Gegenstand der Erfindung ist daher ein Verfahren zur Rückgewinnung von Ammoniak und organischen Verbindungen aus mit organischen Stoffen, Kohlendioxid und Ammoniak beladenen Abgasen, das dadurch gekennzeichnet ist, daß in einer kombinierten Absorptions- und Rektifikationskolonne Kohlendioxid mit Alkalilauge ausgewaschen, Ammoniakals Kopfprodukt abgezogen und aus dem Alkalicarbonat und organische Verbindungen enthaltenden Sumpfprodukt nach Abtrennen des Alkalicarbonats die organischen Verbindungen in reiner Form zurückgewonnen werden.

Im folgenden sollen die Vorteile des Verfahrens beispielhaft an der Aufarbeitung des bei der Herstellung von Bisurethanen aus Diamin, Harnstoff und Butanol entstehenden Ammoniaks, das außer Butanol auch noch Kohlendioxid enthält, gezeigt werden.

Die Bildung der Bisurethane erfolgt nach folgender Gleichung 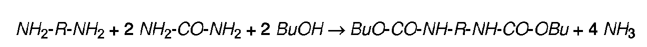 Dabei bildet sich in geringer Menge auch Kohlendioxid, zum Beispiel durch Reaktion von Harnstoff mit durch die Edukte eingebrachtem Wasser. Um die Bildung von Ammoniumcarbamat zu verhindern, muß bei der Ammoniakabtrennung die Temperatur entsprechend dem Dissoziationsgleichgewicht eingestellt werden, was einen entsprechenden Anteil an Butanol erforderlich macht. Aus dem Dampf/Flüssig-Gleichgewicht von Butanol-Ammoniak ergibt sich, daß bei _{Pa} = 12 bar und einer Temperatur von 90 °C 2,5 Mol-% = 10,0 Gew.-% Butanol in der Gasphase enthalten sind. Durch Waschen mit ca. 15 Gew.-%iger Natronlauge unter dem Betriebsdruck in einer kombinierten Absorptions- und Rektifikationskolonne wird das Kohlendioxid als Natriumcarbonat gebunden und somit entfernt. Durch im Sumpf eingebrachte Energie wird am Kopf der Kolonne der erforderliche Rücklauf erzeugt, um wasserfreies Ammoniak abzuziehen und im Sumpf bei der Siedetemperatur des Natriumcarbonat/Wasser/Butanol-Gemisches ein praktisch ammoniakfreies Gemisches von Natriumcarbonat-Lösung und Butanol zu erhalten.

Die Konzentration der Natronlauge wird im Bereich von 10 bis 20 Gew.-% gewählt, so daß die Konzentration an Natriumcarbonat in der wäßrigen Phase etwa 25 bis 30 Gew.-% beträgt. Bei Verwendung von Kalilauge sollte die Konzentration an Kaliumcarbonat etwa 45 Gew.-% betragen. Diese hohe Carbonat-Konzentration ist vorteilhaft, da dadurch die Mischungslücke zwischen Butanol und Wasser nach höheren Temperaturen verschoben wird und so auch bei hohen Temperaturen eine einfache Phasentrennung durch Dekantation möglich ist, daß kein Natriumcarbonat in der Butanolphase und kein Butanol in der wäßrigen Phase vorhanden ist, daß auch der Wassergehalt in der Butanolphase erheblich niedriger als im System Butanol/Wasser ist und daß, falls die Carbonat-Lösung zu festem Salz aufgearbeitet werden soll, die zu verdampfende Wassermenge gering ist. Die so erhaltene Carbonat-Lösung kann überall dort, wo Carbonat-Lösung erforderlich ist, z.B. für Neutralisationen u.a. verwendet werden. Grundsätzlich ist auch die Rückgewinnung von Lauge durch Elektrolyse, Elektrodialyse oder Kaustifizierung möglich.

Die Wasserabtrennung aus der organischen Schicht erfolgt nach bekannter Art. So wird Butanol entwässert durch azeotrope Destillation, wobei zweckmäßigerweise aus der wäßrigen Phase des dabei am Kopf anfallenden Destillats nicht das Wasser durch weitere Destillation reingewonnen wird, sondern direkt zur Verdünnung der eingesetzten Alkalilauge verwendet wird. Um eine Verunreinigung des bei der Trocknung durch azeotrope Destillation im Sumpf anfallenden Butanols durch mitgerissene Carbonat-Lösung zu vermeiden, wird Butanol dampfförmig am ersten Boden abgezogen. Bei Bedarf kann das Produkt aus dem Sumpf in die Phasentrennung zurückgeführt werden.

Ein Vorteil der Heißdekantation unter Druck bei hoher Temperatur ist, daß die fühlbare Wärme anschließend genutzt werden kann zur Entspannungsverdampfung der wäßrigen Phase, um Spuren von Ammoniak und/oder Butanol auszutreiben und zur Wasserabtrennung durch Destillation aus der Butanolphase. Da der Wassergehalt in der organischen Phase mit steigender Temperatur ansteigt, von 12 Gew.-% bei 50 °C auf 13 Gew.-% bei 100 °C und 26 Gew.-% bei 170 °C, kann es zweckmäßig sein, auf die Heißdekantation und Entspannungsverdampfung zu verzichten und dafür nach Nutzung der fühlbaren Warme die Dekantation bei Temperaturen von ca. 100 °C durchzuführen. Heißdekantation und anschließende Abkühlung der organischen Phase für eine weitere Dekantation ist praktisch nicht möglich, da im System Butanol/Wasser das Gleichgewicht so liegt, daß bei 50 °C noch etwa 23 Gew.-% Wasser in der organischen Phase enthalten sind.

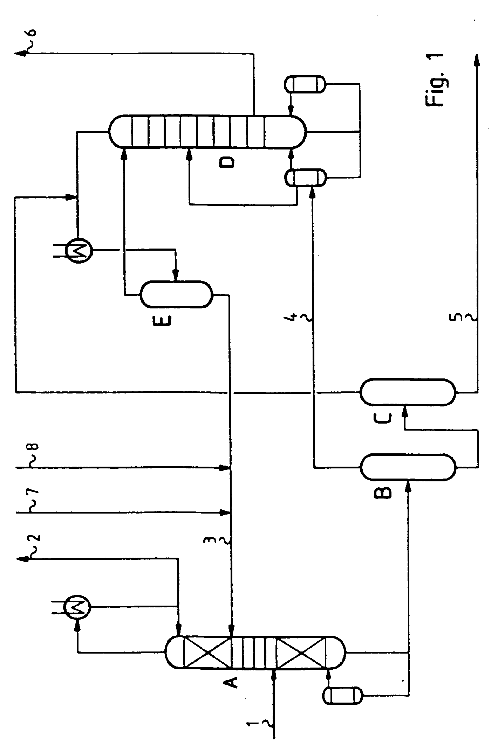

Das folgende Beispiel dient der weiteren Erläuterung des Verfahrens, ohne es auf die Gewinnung von Ammoniak und Alkohol aus dem kohlendioxidhaltigen Abgas der Bisurethan-Herstellung zu beschränken. Die Angaben beziehen sich auf eine Verfahrenseinrichtung gemäß dem dargestellten Schema (Fig. 1) und die Stoffströme gemäß Fig.1 und Tabelle 1.

### Beispiel

Das Abgas aus der Bisurethan-Herstellung (1) wird in den mittleren Bereich der kombinierten Absorptions- und Rektifikationskolonne A gefahren. Diese Kolonne ist im Unterteil und im Oberteil mit Pallringen gefüllt, während in der Mitte vier Ventilböden für die Absorption des Kohlendioxids installiert sind. Im Kolonnensumpf ist ein Reboiler für die Energiezufuhr angebracht, während am Kopf ein Kondensator mit Rückflußteiler und eine Druckregelung installiert ist. Die Kolonne wird praktisch unter gleichem Druck wie der Reaktor zur Bisurethan-Herstellung betrieben, nämlich bei 7 bis 13 bar. Entsprechend beträgt die Sumpftemperatur 155 bis 185 °C. Am Kopf wird wasserfreies Ammoniak (2) abgezogen. Auf den obersten Ventilboden wird die verdünnte Natronlauge (3) eingespeist.

Das im Sumpf der Kolonne anfallende Gemisch von Natriumcarbonat, Wasser und Butanol wird in dem kommunizierend angebrachten Trenngefäß B in eine wäßrige Natriumcarbonat- und in eine Butanolphase getrennt. Die wäßrige Phase, die noch Spuren Butanol enthalten kann, wird in den Entspannungsbehälter C entspannt, von wo die Brüden in den Kondensator der Kolonne D abgeleitet werden, während die Natriumcarbonat-Lösung (5) zum Tanklager geführt wird.

Die organische Phase aus dem Trenngefäß B (4) wird zur Energieausnutzung zunächst über einen Reboiler und dann in das obere Drittel der Butanolkolonne D geleitet. Diese Kolonne ist mit 30 Ventilböden, einem Kondensator am Kopf und einem Trenngefäß E, von wo die obere Phase in die Kolonne zurückkehrt, sowie einem weiteren mit Dampf beheizten Reboiler ausgestattet und wird unter atmosphärischem Druck betrieben. Das so vom Wasser befreite Butanol wird vom untersten Boden dampfförmig abgezogen (6) und kehrt nach Kondensation in die Bisurethan-Herstellung zurück. Die wäßrige Phase aus dem Trenngefäß E wird zur Verdünnung der 50 Gew.-%igen Natronlauge (7) verwendet. Zusätzlich wird noch weiteres Wasser (8) so dosiert, daß die anfallende Natriumcarbonat-Lösung (5) zwischen 23 und 28 Gew.-% Na_{Z}C0₃ enthält.

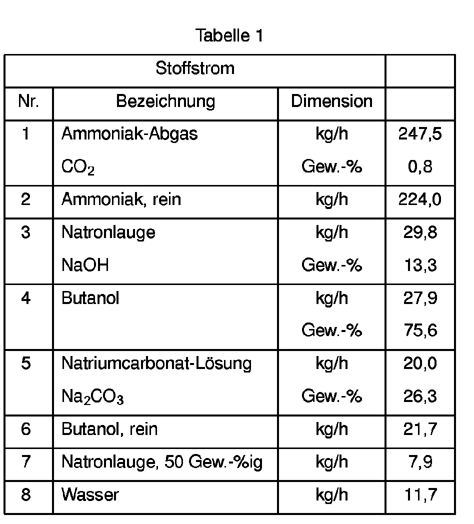

## Patentansprüche

1. Verfahren zur Rückgewinnung von Ammoniak und organischen Verbindungen aus mit organischen Stoffen, Kohlendioxid und Ammoniak beladenen Abgasen, dadurch gekennzeichnet, daß in einer kombinierten Absorptions-und Rektifikationskolonne Kohlendioxid mit Alkalilauge ausgewaschen, Ammoniak als Kopfprodukt abgezogen und aus dem Alkalicarbonat und organische Verbindungen enthaltenden Sumpfprodukt nach Abtrennen des Alkalicarbonats die organischen Verbindungen in reiner Form zurückgewonnen werden.

2. Verfahren nach Anspruch 1,
dadurch gekennzeichnet,
daß die kombinierte Absorptions- und Rektifikationskolonne im Sumpf mit der Siedetemperatur des Gemisches von Alkalicarbonat-Lösung und der organischen Verbindungen betrieben wird.

3. Verfahren nach Anspruch 1,
dadurch gekennzeichnet,
daß als Alkalilaugen wäßrige Lösungen von Natriumhydroxid oder Kaliumhydroxid verwendet werden.

4. Verfahren nach den Ansprüchen 1 und 3,
dadurch gekennzeichnet,
daß bei Verwendung von Natronlauge diese in einer Konzentration von 10 bis 20 Gew.-% eingesetzt wird.

5. Verfahren nach den Ansprüchen 1, 3 und 4,
dadurch gekennzeichnet,
daß die Alkalicarbonat-Lösung durch Dekantation abgetrennt wird.

6. Verfahren nach Anspruch 1,
dadurch gekennzeichnet,
daß das Wasser aus der organischen Phase destillativ abgetrennt und zur Verdünnung der Alkalihydroxid-Lösung verwendet wird.

7. Verfahren zur Rückgewinnung von Ammoniak und organischen Verbindungen aus mit organischen Stoffen, Kohlendioxid und Ammoniak beladenen Abgasen nach Anspruch 1,
dadurch gekennzeichnet,
daß Ammoniak enthaltendes Abgas, wie es bei der Bisurethanherstellung aus Diamin, Harnstoff und Alkohol anfällt, eingesetzt wird.

## Claims

1. A process for recovering ammonia and organic compounds from waste gases containing organic substances, carbon dioxide and ammonia, characterized in that carbon dioxide is scrubbed out with alkali metal hydroxide solution in a combined absorption and rectification column, ammonia is drawn off as top product and the organic compounds are recovered in pure form from the bottom product containing alkali metal carbonate and organic compounds after separating off the alkali metal carbonate.

2. A process according to claim 1, characterized in that the combined absorption and rectification column is operated at a bottom temperature corresponding to the boiling point of the mixture of alkali metal carbonate solution and the organic compounds.

3. A process according to claim 1, characterized in that aqueous solutions of sodium hydroxide or potassium hydroxide are used as alkali metal hydroxide solutions.

4. A process according to either of claims 1 and 3, characterized in that if sodium hydroxide solution is used it is used in a concentration of from 10 to 20% by weight.

5. A process according to any of claims 1, 3 and 4, characterized in that the alkali metal carbonate solution is separated off by decantation.

6. A process according to claim 1, characterized in that the water is separated off from the organic phase by distillation and is used for diluting the alkali metal hydroxide solution.

7. A process for recovering ammonia and organic compounds from waste gases containing organic substances, carbon dioxide and ammonia according to claim 1, characterized in that ammonia-containing waste gas as is formed in bisurethane production from diamine, urea and alcohol is used.

## Revendications

1. Procédé pour récupérer de l'ammoniac et des composés organiques à partir d'effluents gazeux chargés de substances organiques, d'anhydride carbonique et d'ammoniac,
caractérisé par le fait que, dans une colonne combinée d'absorption et de rectification, on élimine par lavage l'anhydride carbonique à l'aide d'une base alcaline, on soutire de l'ammoniac comme produit de tête, et, à partir du produit de fond, qui contient le carbonate d'un métal alcalin et des composés organiques, on récupère sous forme pure les composés organiques après avoir séparé le carbonate d'un métal alcalin.

2. Procédé selon la revendication 1,
caractérisé par le fait que la colonne combinée d'absorption et de rectification est exploitée à une température de fond correspondant à la température d'ébullition du mélange de la solution du carbonate d'un métal alcalin et des composés organiques.

3. Procédé selon la revendication 1,
caractérisé par le fait qu'on utilise comme bases alcalines des solutions aqueuses d'hydroxyde de sodium ou d'hydroxyde de potassium.

4. Procédé selon les revendications 1 à 3,
caractérisé par le fait que, si l'on utilise de l'hydroxyde de sodium, on l'utilise à une concentration de 10 à 20 % en poids.

5. Procédé selon les revendications 1, 3 et 4,
caractérisé par le fait qu'on sépare par décantation la solution de carbonate d'un métal alcalin.

6. Procédé selon la revendication 1,
caractérisé par le fait que l'eau est séparée de la phase organique par distillation et est utilisée pour diluer la solution de l'hydroxyde d'un métal alcalin.

7. Procédé pour récupérer de l'ammoniac et des composés organiques à partir d'effluents gazeux chargés de substances organiques, d'anhydrides carboniques et d'ammoniac, selon la revendication 1,
caractérisé par le fait qu'on utilise un effluent gazeux contenant de l'ammoniac, tel qu'obtenu lors de la préparation du bisuréthanne à partir d'une diamine, de l'urée et d'un alcool.
